# EUROPÄISCHE PATENTSCHRIFT

(11) **EP 3 316 514 B1**
(45) Veröffentlichungstag und Bekanntmachung des Hinweises auf die Patenterteilung: **17.10.2018**
(21) Anmeldenummer: 16196031.5
(22) Anmeldetag: 27.10.2016
(51) Int. Cl.: H04L 12/10

(54) **PROZESSMESSGERÄT MIT STECKBARER SPEICHEREINHEIT**
PROCESS MEASURING DEVICE WITH PLUG-IN MEMORY UNIT
APPAREIL DE MESURE DE PROCESSUS COMPRENANT UNE UNITÉ DE MÉMOIRE ENFICHABLE

(43) Veröffentlichungstag der Anmeldung: 02.05.2018
(73) Patentinhaber: VEGA Grieshaber KG, 77709 Wolfach (DE)
(72) Erfinder: WELLE, Roland, 77756 Hausach (DE); GRIEßBAUM, Karl, 77796 Mühlenbach (DE); BÖRSIG, Jörg, 77709 Oberwolfach (DE); STAIGER, Holger, 78739 Hardt (DE); HENGSTLER, Clemens, 77716 Haslach (DE); OEHLER, Thomas, 77781 Biberach (DE); HARTER, Manuel, 77709 Oberwolfach (DE)
(74) Vertreter: Maiwald Patent- und Rechtsanwaltsgesellschaft mbH

(56) Entgegenhaltungen:
- EP-A1- 2 418 801
- US-A1- 2011 283 119
- US-A1- 2013 173 939
- US-A1- 2014 098 842

## Beschreibung

### Gebiet der Erfindung

Die Erfindung betrifft die Prozessmesstechnik. Insbesondere betrifft die Erfindung ein Prozessmessgcrät zum Anschluss einer steckbaren Speichereinheit, ein Verfahren zum Beschreiben und Auslesen einer steckbaren Speichereinheit durch ein Prozessmessgerät, ein Programmelement und ein computerlesbares Medium.

### Hintergrund

Prozessmessgeräte messen in industriellen Prozessen eine Vielzahl von relevanten Parametern, wie beispielsweise Temperatur, Druck, Füllstand, ph-Wert, Viskosität, Durchfluss. Um den Installations- und Wartungsaufwand zu reduzieren, kommen bei der Installation solcher Prozessmessgeräte vielfach Zweileitersysteme zum Einsatz, insbesondere 4...20mA Zweileiterschleifen, HART, Profibus PA oder Foundation Fieldbus Zweileitersysteme.

Die angeschlossenen Prozessmessgeräte werden nur mit einer begrenzten Leistung versorgt. So kann bei 4...20mA-Systemen die gesamte, für die Messung innerhalb eines Prozessmessgeräts verfügbare Leistung 50 mW oder weniger betragen. Zudem kann die Übertragung von Informationen von einer Prozessleitwarte zum Sensor, der im Folgenden auch als Prozessmessgerät bezeichnet wird, sehr langsam sein, was bei einer reinen Übertragung von Messwerten zu keinerlei Problemen führt.

Moderne Prozessmessgeräte zeichnen sich jedoch durch einen hohen Grad an digitalen Schaltungskomponenten aus. Mit der in den vergangenen Jahren stetig gestiegenen Zahl an leistungsfähigen und zugleich stromsparenden Mikroprozessoren wurde eine Vielzahl an Aufgaben zur Ermittlung der eigentlichen Messwerte durch Softwareprogramme übernommen. Gleichzeitig wächst der Bedarf an neuen Funktionen von Seiten der Kunden solcher Prozessmessgeräte stetig. Dies kann dazu führen, dass bereits installierte Sensoren per Softwareupdate in ihrer Funktionalität verändert werden müssen.

Darüber hinaus besteht von Seiten der Betreiber prozesstechnischer Anlagen häufig der Wunsch nach einer systematischen Protokollierung unvorhergesehener Betriebszustände des Prozessmessgeräts, insbesondere in Fehlerfällen. Für eine Rekonstruktion der Vorgänge, welche zu einem Ausfall des Messgerätes führen, kann die Speicherung umfangreicher Informationen notwendig werden.

EP 2 418 801 A1 beschreibt ein System und ein Verfahren zur Diagnose eines Geräts, beispielsweise eines Prozessmessgeräts mit einem entfernt angeordneten Energiemanagementsystem.

### Zusammenfassung der Erfindung

Es ist eine Aufgabe der vorliegenden Erfindung, ein Prozessmessgerät bereitzustellen, das ein schnelles Einlesen und Auslesen von Daten ermöglicht.

Diese Aufgabe wird durch die Merkmale der unabhängigen Patentansprüche gelöst. Weiterbildungen der Erfindung ergeben sich aus den Unteransprüchen und der folgenden Beschreibung.

Ein erster Aspekt der Erfindung betrifft ein Prozessmessgerät, beispielsweise ein Füllstandmessgerät, das eine Schnittstelle zum Anschluss einer steckbaren

Speichereinheit an das Prozessmessgerät aufweist. Bei der steckbaren Speichereinheit kann es sich insbesondere um eine Speichereinheit handeln, die große Datenmengen speichert und mit hoher Geschwindigkeit auslesbar und beschreibbar ist und welche von dem Prozessmessgerät mit der für ihren Betrieb erforderlichen Energie versorgt wird.

Um den hierfür erforderlichen Energiebedarf abzudecken, ist im Prozessmessgerät eine Speicherbetriebsvorrichtung vorgesehen, welche zum automatischen Überführen des Prozessmessgeräts in einen Speicherzugriffsmodus ausgeführt ist, wenn die steckbare Speichereinheit an die Schnittstelle angesteckt wird und/oder in Betrieb genommen wird. Im Speicherzugriffsmodus kann das Prozessmessgerät die steckbare Speichereinheit mit der für einen Lesezugriff und/oder Schreibzugriff des Prozessmessgerätes auf die Speichereinheit benötigten elektrischen Energie versorgen. Darüber hinaus weist das Prozessmessgerät eine Energieversorgungseinheit auf, welche zum Bereitstellen der für den Lesezugriff und/oder den Schreibzugriff des Prozessmessgerätes auf die steckbare Speichereinheit (oder umgekehrt) benötigten elektrischen Energie ausgeführt ist, indem die im Prozessmessgerät frei verfügbare elektrische Energie automatisch erhöht wird.

Bei der im Prozessmessgerät frei verfügbaren elektrischen Energie handelt es sich um die Energie, welche nicht bereits für andere Zwecke vorgesehen ist, wie beispielsweise für das Durchführen einer Messung, die Messdatenanalyse oder die Datenübermittlung, oder für den Betrieb eines Peripheriegeräts, welches an das Prozessmessgerät angeschlossen ist und von diesem mit elektrischer Energie versorgt wird.

Die im Prozessmessgerät frei verfügbare elektrische Energie kann, gemäß einer Ausführungsform, dadurch erhöht werden, dass die Energieeinspeisung in das Messgerät erhöht wird.

Gemäß einer Ausführungsform der Erfindung ist die Energieversorgungseinheit ausgeführt, die für den Lesezugriff und/oder den Schreibzugriff auf das Prozessmessgerät bzw. die steckbare Speichereinheit benötigte elektrische Energie bereitzustellen, indem die von einer externen Energiequelle (beispielsweise eine 4...20mA Zweidrahtleitung) auf das Prozessmessgerät übertragene elektrische Leistung erhöht wird. Im obengenannten Beispiel kann beispielsweise vorgesehen sein, dass der Strom in der Zweidrahtleitung auf einen Maximalwert heraufgesetzt wird.

Gemäß einer weiteren Ausführungsform der Erfindung ist die Energieversorgungseinheit ausgeführt, die für den Lesezugriff und/oder den Schreibzugriff auf das Prozessmessgerät bzw. die steckbare Speichereinheit benötigte Energie bereitzustellen, indem die vom Prozessmessgerät benötigte elektrische Leistung verringert wird.

Alternativ oder zusätzlich kann vorgesehen sein, dass zur Bereitstellung der für den Lesezugriff und/oder Schreibzugriff benötigten elektrischen Energie die von einem oder mehreren an das Prozessmessgerät angeschlossenen und von diesem versorgten Peripheriegeräte benötigte elektrische Leistung verringert wird.

Es kann vorgesehen sein, dass die obengenannten Maßnahmen stufenweise, hintereinander erfolgen, bis der von der steckbaren Speichereinheit benötigte Energiebedarf gedeckt oder vorzugsweise sogar übertroffen ist. Es kann auch vorgesehen sein, dass sämtliche oder eine Auswahl der genannten Maßnahmen gleichzeitig erfolgen, um möglichst schnell eine möglichst große Leistung zum Betrieb der Spcichereinheit bereitstellen zu können.

Gemäß einer Ausführungsform der Erfindung ist das Prozessmessgerät zum Beziehen seiner elektrischen Energie ausschließlich aus einer 4...20mA Zweiteiterschleife ausgeführt.

Gemäß einer weiteren Ausführungsform der Erfindung kann das Prozessmessgerät die von ihm und den ggf. daran angeschlossenen Peripheriegeräten benötigte elektrische Leistung sowie die vom steckbaren Speichermedium benötigte elektrische Leistung kontinuierlich überwachen. Auf diese Weise kann verhindert werden, dass das Prozessmessgerät in ein Leistungsdefizit fällt, dass also in anderen Worten mehr Leistung benötigt wird, als von der externen Energieversorgung bereitgestellt wird.

Gemäß einer weiteren Ausführungsform der Erfindung ist die Speicherbetriebsvorrichtung ausgeführt, aus den ersten von der steckbaren Speichereinheit an das Prozessmessgerät übertragenen Daten zu erkennen, ob ein Softwareupdate eingespielt werden soll, und in diesem Fall die von der externen Energiequelle auf das Prozessmessgerät übertragene elektrische Leistung zu erhöhen. Auf diese Weise kann sichergestellt werden, dass automatisch und frühzeitig erkannt werden kann, ob neue Software auf das Prozessmessgerät aufgespielt werden soll, sodass möglichst zügig ausreichend Energie bereitgestellt werden kann.

Bei dem Prozessmessgerät handelt es sich beispielsweise um ein Füllstandmessgerät, ein Druckmessgorät, einen Grenzstandsensor oder ein Durchflussmessgerät.

Gemäß einer Ausführungsform der Erfindung handelt es sich bei der Schnittstelle, an welche die steckbare Speichereinheit an das Prozessmessgerät anschließbar ist, um eine Mehrzweckschnittstelle, welche auch von einem Peripheriegerät nutzbar ist, beispielsweise einem Anzeige- und Bediengerät.

Auf diese Weise kann ein kompaktes Prozessmessgerät bereitgestellt werden, dessen Schnittstellen flexibel einsetzbar sind.

Gemäß einer weiteren Ausfiihrungsform der Erfindung ist die Schnittstelle zur Aufnahme der steckbaren Speichereinheit in dem Prozessmessgerät ausgeführt. Die steckbare Speichereinheit kann somit inklusive der Schnittstelle innerhalb eines druckfest gekapselten Sensorgehäuses integriert sein. Es kann vorgesehen sein, dass die steckbare Speichereinheit und die zugehörige Sensorschnittstelle nach dem Öffnen einer Abdeckung des Sensorgehäuses von außen zugänglich ist, und dem Anwender ein Auswechseln des Mediums bei Abwesenheit explosionsgefährlicher Gase oder Stäube ermöglichen

Ein weiterer Aspekt der Erfindung betrifft ein Verfahren zum Beschreiben und/oder Auslesen einer steckbaren Speichereinheit durch ein Prozessmessgerät. Zunächst wird eine steckbare Speichereinheit an eine Schnittstelle des Prozessmessgeräts angeschlossen, indem sie an die Schnittstelle angesteckt wird. das Prozessmessgerät mag in der Lage sein, das Einstecken oder Entfernen einer Speichereinheit selbständig zu erkennen. Es kann insbesondere vorgesehen sein, dass das Prozessmessgerät beim Erkennen eines Einsteckens eines Speichermediums selbständig eine vorgebbare Anzahl an Bytes aus diesem Medium ausliest. Es kann vorgesehen sein, dass das Prozessmessgerät anhand der so ausgelesenen Bytes selbständig vorab definierte Betriebsabläufe initiiert, beispielsweise ein Softwareupdate oder ein Abspeichern von Diagnosedaten.

Daraufhin wird das Prozessmessgerät automatisch in einen Speicherzugriffsmodus überführt, in welchem das Prozessmessgerät die steckbare Speichereinheit mit der für einen Lesezugriff und/oder Schreibzugriff des Prozessmessgeräts auf die Speichereinheit benötigten elektrischen Energie versorgen kann. Die benötigte elektrische Energie wird davon abhängen, um welche Art von Speichereinheit es sich handelt und welcher Vorgang auszuführen ist. Die für den Lesezugriff und/oder den Schreibzugriff benötigte elektrische Energie wird bereitgestellt, indem die im Prozessmessgerät frei verfügbare elektrische Energie erhöht wird. Dieser Vorgang wird durch den Umstand getriggert, dass die steckbare Speichereinheit an die Schnittstelle des Prozessmessgeräts angeschlossen wird. Das Prozcssmcssgerät mag anschließend selbständig bestimmen, ob Daten aus dem Medium gelesen und/oder ob Daten auf das Medium geschrieben werden sollen. Es kann auch vorgesehen sein, dass ein Benutzer über eine Benutzerschnittstelle einstellen kann, ob Daten gelesen und/oder geschrieben werden sollen.

Ein weiterer Aspekt der Erfindung betrifft ein Programmelement, das, wenn es von einer Speicherbetriebsvorrichtung eines Prozessmessgeräts ausgeführt wird, das Prozessmessgerät anleitet, die oben und im Folgenden beschriebenen Schritte auszuführen.

Gemäß einem weiteren Aspekt der Erfindung ist ein computerlesbares Medium angegeben, auf dem das oben beschriebene Programmelement gespeichert ist.

### Kurze Beschreibung von Ausführungsbeispielen

Im Folgenden werden mit Verweis auf die Figuren Ausführungsbeispiele der Erfindung beschrieben. Die Figuren sind schematisch und nicht maßstäblich.
Fig. 1 zeigt ein Prozessmessgerät.
Fig. 2 zeigt ein Prozessmessgerät mit einem daran angeschlossenen Peripheriegerät.
Fig. 3A zeigt ein Prozessmessgerät gemäß einem Ausführungsheispiel der Erfindung.
Fig. 3B zeigt ein Prozessmessgerät gemäß einem weiteren Ausführungsbeispiel der Erfindung.
Fig. 4 zeigt ein Flussdiagramm eines Verfahrens gemäß einem Ausführungsbeispiel der Erfindung.
Fig. 5 zeigt ein Flussdiagramm eines Verfahrens gemäß einem weiteren Ausführungsbeispiel der Erfindung.

### Detaillierte Beschreibung von Ausführungsbeispielen

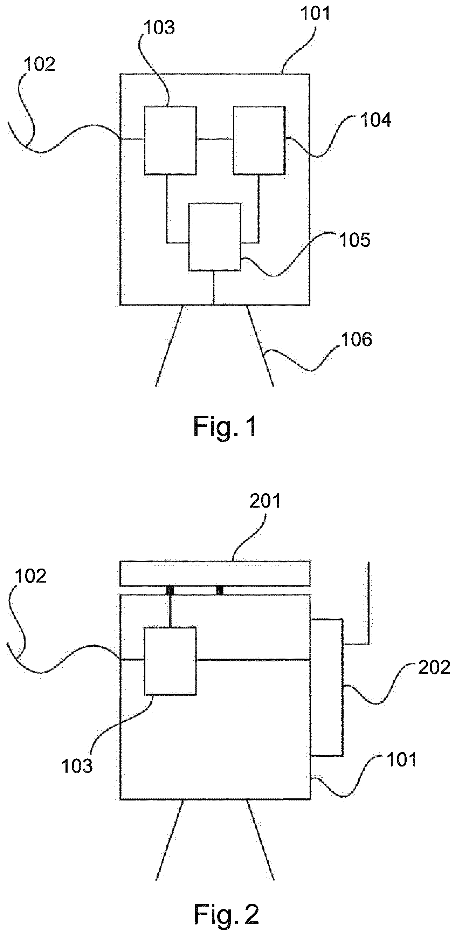

Fig. 1 zeigt einen typischen Aufbau eines Prozessmessgeräts 101. Die gesamte Energie, welche für den Betrieb des Messgerätes benötigt wird, wird dem Messgerät über eine Schnittstelle 102, beispielsweise eine 4..20 mA Schnittstelle, zugeführt. Eine im Prozessmessgerät 1 01 integrierte Energieversorgungs- und Kommunikationseinheit 103 stellt zum einen die Messwerte durch Einstellen eines dem Messwerte entsprechenden Schleifenstroms nach außen hin zur Verfügung. Weiterhin versorgt die Energieversorgungs- und Kommunikationseinheit 103 die anderen Komponenten des Messgerätes, also insbesondere die Auswerte- und Steuereinheit 104 sowie die eigentliche Messeinheit 105, mit Energie. Es kann auch vorgesehen sein, weitere Elektronikeinheiten mit Energie zu versorgen.

Fig. 2 zeigt ein entsprechendes Prozessmessgerät. Beispielhaft wird das bereits zuvor gezeigte Messgerät 101 hier modular um zusätzliche Komponenten 201, 202 erweitert. Je nach Anforderung des Kunden kann vorgesehen sein, zusätzliche Peripheriegeräte 201, 202 in oder an das Gehäuse des Prozessmessgeräts 101 zu montieren.

So kann das Prozessmessgerät 101 beispielsweise mit einem Anzeigemodul 201 oder mit einem Bluetoothmodul 202 ausgestattet werden. Weiterhin kann vorgesehen sein, weitere Kommunikationsstandards (WLAN, Modbus, 4-Leiter) oder Zusatzfunktionalitäten (Kommunikationsmodem zur Anbindung an PC's, Servicemodule) durch ein Anbinden über Peripheriegeräte an oder im Sensor bereitzustellen. Diese Peripheriegeräte beziehen die für den Betrieb notwendige Energie im Allgemeinen vollständig vom Prozessmessgerät 101, insbesondere von der Energieversorgungseinheit 103.

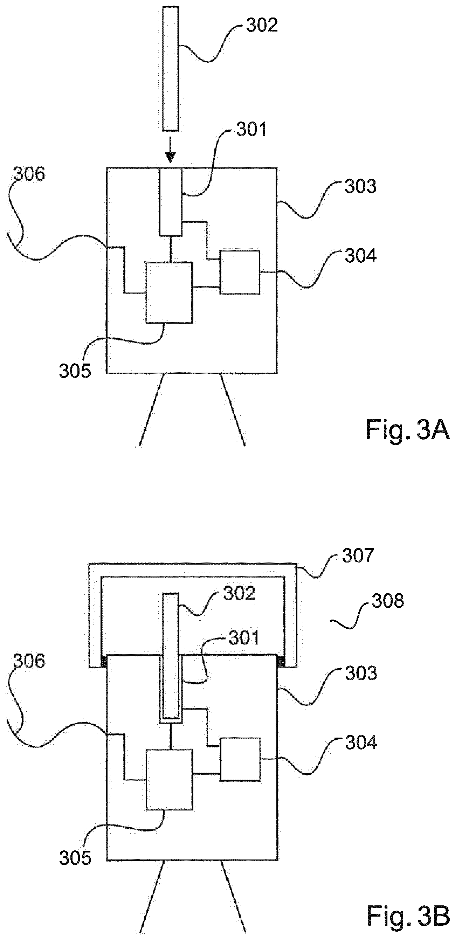

Fig. 3A zeigt ein erstes Ausführungsbeispiel eines erfindungsgemäßen Prozessmessgeräts. Das Prozessmessgerät 303 besitzt eine im vorliegenden Ausführungsbeispiel innerhalb der Sensorelektronik integrierte Schnittstelle in Form einer Kontaktierungseinrichtung 301, welche dazu geeignet ist, eine steckbare Speichereinheit 302 mechanisch und elektrisch mit dem Prozessmessgerät 303 zu verbinden.

Die steckbare Speichereinheit 302 mag eine SD-Card, Multi-Media-Card, USB-Stick, Micro-SD-Card, oder CF-Card sein. Es kann aber auch vorgesehen sein, andere Einheiten zur Speicherung von Daten hier einzusetzen.

Die Speichereinheit 302 kann insbesondere dazu genutzt werden, Daten an das Prozessmessgerät zu übermitteln, beispielsweise im Rahmen eines Softwareupdates. Es kann auch vorgesehen sein, dass das Prozessmessgerät Daten auf das Speichermedium 302 schreibt, beispielsweise Statusinformationen, Fehlermeldungen oder Abbilddatcn des Systemspeichers bei Fehlfunktionen des Prozessmessgerätes. Da die Speichereinheit einfach und ohne zusätzliches Werkzeug im Feld gewechselt werden kann, wird ein hoher Kundennutzen erreicht.

Die steckbare Speichereinheit 302 wird von einer damit verbundenen Speicherbetriebsvorrichtung 304 mit Schreib- und/oder Lesekommandos versorgt. Die zum Lesen und/oder Schreiben benötigte Energie wird zumindest zum Teil vom Prozessmessgerät 303 selbst und hier insbesondere von der Energieversorgungseinheit 305 bereitgestellt.

Es ist möglich, dass die zum Schreiben und/oder Lesen benötigte elektrische Leistung so groß ist, dass ein ungestörter Betrieb des Prozessmessgeräts 303, bei dem es sich um ein Feldgerätes handelt, nicht mehr erreicht werden kann. Die Energieversorgungseinheit 305 ist in der Lage, die benötigte Leistung der im Prozessmessgerät aktiven Komponenten und die benötigte Leistung des steckbaren Speichermediums 302 fortlaufend zu überwachen und in Bezug zur aktuell über die Zweileiterschnittstelle 306 bereitgestellten Leistung zu setzen. Letztere ist bei realen Sensoren großen Schwankungen unterworfen. So kann ein erster Messwert, beispielsweise bei einem ermittelten Druck von 0 bar, einen Schleifenstrom von 4 mA bedingen. Bei einer Versorgungsspannung von typischerweise 15V stehen somit für den Betrieb des Sensors (und der eventuell daran angeschlossenen Peripheriegeräte) rund 60mW zur Verfügung. Ein zweiter Messwert von beispielsweise 10 bar kann zu einem Schleifenstrom von 20 mA führen, was einer verfügbaren Leistung von 300 mW entspricht.

Bei einem Schreibvorgang auf einer SD-Card werden typischerweise 150 mW an elektrischer Leistung benötigt. Es ist somit ersichtlich, dass beim Vorliegen eines ungünstigen Messwertes die Leistung zum Betrieb des Prozessmessgerätes und zum Schreiben des steckbaren Speichermediums ungenügend groß sein kann.

Die steckbare Speichtereinheit und die zugehörige Sensorschnittstelle kann in einer besonders vorteilhaften Ausgestaltung nach dem Öffnen einer Abdeckung 307 des Sensorgehäuses 303 von außen zugänglich sein, und dem Anwender ein Auswechseln des Mediums bei Abwesenheit explosionsgefährlicher Gase oder Stäube ermöglichen. Fig. 3B zeigt eine entsprechende Anordnung mit aufgesetztem Deckel 307, welcher das Speichermedium 302 und die Schnittstelle 301 hermetisch dicht von einer ggf. explosionsfähigen Atmosphäre 308 trennt.

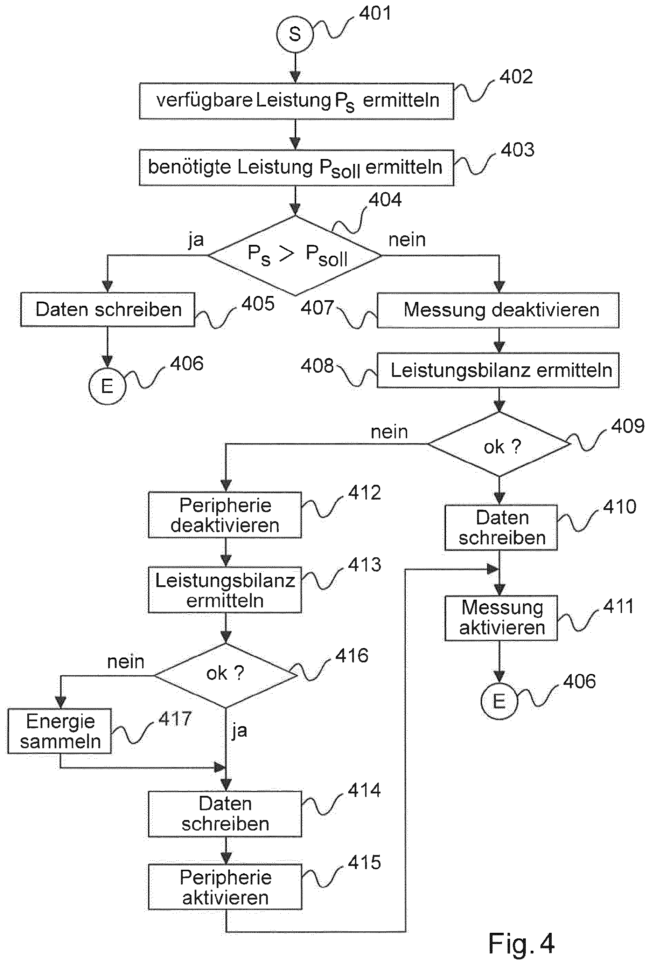

Fig. 4 zeigt einen innerhalb einer Energieversorgungseinrichtung 305 ablaufenden Vorgang zur Beseitigung der aufgezeigten Probleme. Das Verfahren setzt beim Vorliegen einer Schreibanforderung der Speicherbetriebsvorrichtung 304 im Startzustand 401 ein. Im Schritt 402 wird zunächst die über die Schnittstelle 306 dem Sensor zugeführte elektrische Leistung Ps ermittelt. Im Schritt 403 wird dann die vom Sensor, der angeschlossenen Peripherie sowie der SD-Card im Schreibmodus benötigte Leistung Psoll ermittelt. Ist die verfügbare Leistung Ps groß genug, so wird im Schritt 405 das steckbare Speichermedium beschrieben. Das Verfahren endet somit im Zustand 406. Andernfalls wird versucht, die aktuell benötigte Leistung des Sensors zu verringern. Im Schritt 407 wird hierfür zunächst die eigentliche Messung deaktiviert. Durch das Abschalten der zugehörigen Schaltungsteile wird die benötigte Leistung deutlich reduziert. Im Schritt 408 erfolgt anschließend eine Ermittlung der aktuell benötigten Leistung, die sich hier aus der Leistung der Peripherie und der Leistung zum Schreiben auf das Medium zusammensetzt. Ist die Summe der vom Sensor und dem Speichermedium im Schreibmodus benötigte Leistung nun kleiner als die verfügbare Leistung, so werden im Schritt 410 die Daten auf das Medium geschrieben. Anschließend wird im Schritt 411 die Messung wieder aktiviert, und das Verfahren endet im Zustand 406. Ergibt die Überprüfung im Schritt 409 jedoch, dass die zum Schreiben benötigte Leistung immer noch nicht vorhanden ist, so werden im Schritt 412 ein oder mehrere Peripheriegeräte (z.B. Anzeigemodul, Bluetooth-Modul, ...) deaktiviert. Im Schritt 413 wird nun geprüft, ob die verfügbare Leistung ausreicht, die Daten auf das Medium zu schreiben. Ist dies der Fall, so werden im Schritt 414 die Daten auf dem Medium gespeichert, bevor die externen Peripheriegeräte sowie die eigentliche Messung wieder aktiviert werden. Ergibt die Überprüfung im Schritt 416 jedoch, dass die zum Schreiben benötigte Energie noch immer nicht zur Verfügung steht, so wird im Schritt 417 ein im Sensor integrierter Energiespeicher mit elektrischer Energie befüllt. Ist in diesem ausreichend Energie für einen Schreibzugriff gesammelt worden, so werden die Daten im Schritt 414 auf das Speichermedium geschrieben.

Es sei an dieser Stelle darauf hingewiesen, dass es insbesondere für den zuletzt genannten Vorgang des Energiesammelns notwendig sein kann, umfangreiche Datensätze nicht an einem Stück auf das Speichermedium zu schreiben, sondern in kleinen Teilpaketen von beispielsweise 32 Byte. Die hierfür benötigte Energie kann der Energieversorgungseinheit 305 vorab bekannt sein, womit diese in die Lage versetzt wird, im Schritt 417 festzustellen, wann genügend Energie gesammelt worden ist. Die eigentliche Bildung von Teilpaketen mag in einer Ausführungsform Aufgabe der Speicherbetriebsvorrichtung 304 sein. Die Speicherbetriebsvorrichtung 304 und die Energieversorgungseinheit 305 können über Leitungen verbunden sein, was den Austausch von Steuerbefehlen zur Umsetzung des oben dargestellten Ablaufs ermöglichen mag.

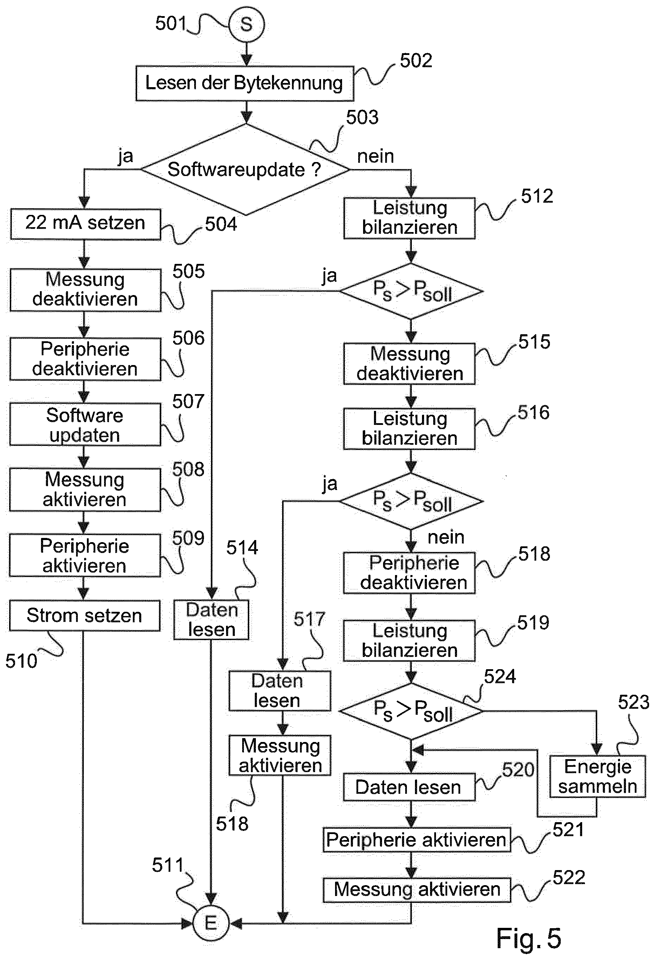

Fig. 5 zeigt einen Ablauf zum Lesen von Daten aus dem steckbaren Speichermodul 302, welcher besonders vorteilhaft beim Einspielen einer neuen Gerätefirmware verwendet werden mag. Das Verfahren beginnt im Startzustand 501. Zunächst werden die ersten Bytes aus dem Speichermedium 302 gelesen. Anhand dieser kann im Schritt 503 entschieden werden, ob ein Softwareupdate eingespielt werden soll. Ist dies der Fall, so wird im Schritt 504 der Schleifenstrom 306 zunächst auf einen Maximalwert, beispielsweise 22mA, erhöht. Die erhöhte Stromaufnahme signalisiert dem Prozessleitsystem, an welches das Prozessmessgerät angeschlossen ist, dass der Sensor eine Störung aufweist. Durch diese Maßnahme wird die vom Prozessmessgerät aufgenommene Energie massiv erhöht. Unterstützend wird im Schritt 504 die eigentliche Messung deaktiviert. Da nach außen hin durch das Einstellen des Störstroms keine Messwerte mehr übertragen werden, kann auf die Ermittlung weiterer Messwerte ohne weiteres verzichtet werden. Im Schritt 506 kann optional auch die Peripherie des Prozessmessgerätes 201, 202 deaktiviert werden, um die Leistungsbilanz weiter zu optimieren, und ein sehr schnelles Einspielen einer neuen Firmware zu unterstützen. Im Schritt 507 wird die neue Firmware vom steckbaren Speichermedium gelesen und in den Sensor eingespielt. Aufgrund der hohen verfügbaren Leistung bei gleichzeitig minimiertem Verbrauch kann dieser Schritt sehr schnell durchgeführt werden. Im Schritt 508 wird die Messung mit der neuen Firmware wieder aktiviert. Zudem werden im Schritt 509 die externen Peripheriegeräte wieder mit elektrischer Energie versorgt. Im Schritt 510 wird schließlich der bislang an der Schnittstelle 306 eingeprägte Störstrom von 22mA durch einen dem ermittelten Messwert entsprechenden Sensorstrom ersetzt. Das Update endet im Zustand 511.

Fig. 5 zeigt weiterhin den Ablauf beim Lesen von allgemeinen Daten, beispielsweise einer neuen Parametrierung für den Sensor. Eine Leseanforderung der Speicherhetriebsvorrichtung 304 führt demnach im Schritt 512 zunächst zur Ermittlung der aktuellen Leistungsbilanz, welche sich aus der aktuell zugeführten Leistung unter Abzug der vom Sensor und einem Lesevorgang benötigten Leistung ergibt. Ist die verfügbare Leistung groß genug, so werden die zu lesenden Daten im Schritt 514 gelesen, bevor das Verfahren im Schritt 511 endet. Reicht die Leistung zum Lesen der Daten nicht aus, so wird im Schritt 515 zunächst die Messung deaktiviert, bevor im Schritt 516 eine erneute Ermittlung der Leistungsbilanz erfolgt. Ist diese nun positiv, so werden die zu lesenden Daten im Schritt 517 vom Speichermedium 302 gelesen, und die Messung wieder aktiviert 518. Reicht hingegen die Leistung noch immer nicht aus, so wird im Schritt 518 auch die angeschlossene Peripherie deaktiviert, und eine erneute Ermittlung der Leistungsbilanz 519 initiiert. Reicht die Leistung zum Lesen der Daten nun aus, so werden diese eingelesen 520. Daran anschließend folgt die Aktivierung der Peripherie 521 und der eigentlichen Messung 522, bevor der Endzustand 511 erreicht wird. Ergibt die Überprüfung im Schritt 524 jedoch, dass die Leistung noch immer nicht ausreicht, so wird im Schritt 523 in einer Energiespeichereinheit Energie gesammelt, bis ein Einlesen einer vorgebbaren Anzahl Bytes durchgeführt werden kann. Es obliegt der Speicherbetriebsvorrichtung 304, eine erneute Leseanforderung zu initiieren, falls die Anzahl der auf diese Art und Weise eingelesenen Bytes unzureichend ist. Das Verfahren beginnt in diesem Fall wieder im Schritt 501.

Es kann vorgesehen sein, dass der Energiebedarf eines steckbaren Speichermediums innerhalb des Gerätes vorab bekannt ist. Ein solcher Ansatz würde beispielsweise dann Erfolg versprechen, wenn nur freigegebene Fabrikate einer steckbaren Speichereinheit in Verbindung mit dem Prozessmessgerät verwendet werden dürfen. Es kann auch vorgesehen sein, dass das Prozessmessgerät beim Einstecken eines Speichermediums zunächst automatisiert ermittelt, welche Leistung zum Lesen und/oder zum Schreiben von/auf das Medium benötigt wird. Technisch umsetzen lässt sich dies durch eine Schreiben und Lesen weniger Testbytes in Verbindung mit einer Messung der vom steckbaren Speichermedium aufgenommenen Leistung.

Es kann vorgesehen sein, dass Daten in komprimierter Form auf das steckbare Medium geschrieben werden. Dies ermöglicht eine kürzere Dauer des eigentlichen Schreibzugriffs, da weniger Bytes übertragen werden müssen. Es kann auch vorgesehen sein, gängige Kompressionsalgorithmen zu verwenden, beispielsweise ZIP, RAR oder andere. Zudem kann beim Lesen von Daten vorgesehen sein, automatisiert zu ermitteln, ob diese entpackt werden müssen oder nicht.

Es ist besonders vorteilhaft, die Daten auf dem steckbaren Speichermedium in einem gängigen Dateiformat (z.B. FAT. NTFS, ...) zu schreiben. Der Betreiber und/oder das Servicepersonal erhält hierdurch die Möglichkeit, den geschriebenen Inhalt an einem beliebigen PC auszulesen.

Es kann vorgesehen sein, die Daten beim Schreiben auf das steckbare Medium zu verschlüsseln. Insbesondere in sensiblen Anlagen kann damit einem Missbrauch der Daten bei Diebstahl durch unbefugtes Entfernen des Speichermediums vorgebeugt werden.

Es kann vorgesehen sein, die Daten zu signieren. Hierdurch kann erreicht werden, dass nur Daten aus einer bekannten und vertrauenswürdigen Quelle in den Sensor cingelesen werden können, und hierdurch insbesondere das Einspielen von Schadsoftware verhindert wird. Letzteres könnte auch durch eine Beschränkung der Schreib- und/oder Lesefunktion auf vom Hersteller speziell freigegebene Datenträger erreicht werden.

Es kann vorgesehen sein, mehrere steckbare Speichermedien mit dem Prozessmessgcrät zu verbinden. Hierdurch kann eine erhöhte Ausfallsicherheit oder eine von der Sicherheitsnorm geforderte Redundanz erreicht werden. Zudem lässt sich die Ausfallsicherheit beim unbeabsichtigten Entfernen des Mediums während eines Schreib- oder Lesezugriffs erhöhen.

Es kann vorgesehen sein, den Benutzer anhand eines Signaltons oder einer Anzeige darüber zu informieren, dass das steckbare Speichermedium ohne Datcnverlust entfernt werden kann. Hierdurch erhöht sich die Sicherheit beim Betrieb mit steckbaren Speichermedien.

Es kann vorgesehen sein, den steckbaren Datenträger inklusive der Kontaktierungseinrichtung innerhalb eines druckfest gekapselten Sensorgehäuses zu integrieren. Es kann auch vorgesehen sein, die elektrische Kontaktierung des steckbaren Mediums auf Seile des Prozessmessgerätes mit speziellen Schutzschaltungen auszustatten. Hierdurch kann eine Zulassung des Prozessmessgerätes innerhalb einer explosionsgefährdeten Umgebung erreicht werden.

Insbesondere kann vorgesehen sein, die elektrische Kontaktierung des steckbaren Speichermoduls über eine Mehrzweckschnittstelle zu realisieren. Bei Abwesenheit des steckbaren Mediums kann die Schnittstelle zum Anschluss weiterer Peripheriegeräte, beispielsweise einer weiteren Anzeige- und Bediencinrichtung, genutzt werden. Hierdurch wird eine kompakte Bauform des Prozessmessgerätes erreicht.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Prozessmessgerät (303), aufweisend:
eine Schnittstelle (301) zum Anschluss einer steckbaren Speichereinheit (302) an das Prozessmessgerät;
eine Speicherbetriebsvorrichtung (304) zum Überführen des Prozessmessgeräts in einen Speicherzugriffsmodus, welcher **dadurch gekennzeichnet ist, dass**
das Prozessmessgerät die steckbare Speichereinheit mit der für einen Lesezugriff oder Schreibzugriff auf die steckbare Speichereinheit (302) benötigten elektrischen Energie versorgen kann;
wobei das Prozessmessgerät eine Energieversorgungseinheit (305) aufweist, zum Bereitstellen der für den Lesezugriff oder den Schreibzugriff auf die steckbare Speichereinheit (302) benötigten elektrischen Energie durch Erhöhen der im Prozessmessgerät frei verfügbaren elektrischen Energie.

2. Prozessmessgerät (303) nach Anspruch 1,
wobei die Energieversorgungseinheit (305) ausgeführt ist, zum Bereitstellen der für den Lesezugriff oder den Schreibzugriff auf das Prozessmessgerät benötigten elektrischen Energie Folgendes durchzuführen:
Erhöhen der Stromaufnahme des Prozessmessgeräts.

3. Prozessmessgerät (303) nach Anspruch 1 oder 2,
wobei die Energieversorgungseinheit (305) ausgeführt ist, zum Bereitstellen der für den Lesezugriff oder den Schreibzugriff auf das Prozessmessgerät benötigten elektrischen Energie Folgendes durchzuführen:
Verringern der vom Prozessmessgerät benötigten elektrischen Leistung.

4. Prozessmessgerät (303) nach einem der vorhergehenden Ansprüche,
wobei die Energieversorgungseinheit (305) ausgeführt ist, zum Bereitstellen der für den Lesezugriff oder den Schreibzugriff auf das Prozessmessgerät benötigten elektrischen Energie Folgendes durchzuführen:
Verringern der von einem am Prozessmessgerät angeschlossenen und von diesem versorgten Peripheriegerät benötigten elektrischen Leistung.

5. Prozessmessgerät (303) nach einem der vorhergehenden Ansprüche,
wobei das Prozessmessgerät zum Beziehen seiner elektrischen Energie ausschließlich aus einer 4-20 mA Zweileiterschleife (102) ausgeführt ist.

6. Prozessmessgerät (303) nach einem der vorhergehenden Ansprüche,
ausgeführt zum kontinuierlichen Überwachen der vom Prozessmessgerät und den gegebenenfalls daran angeschlossenen Peripheriegeräten benötigten elektrischen Leistung, sowie der vom steckbaren Speichermedium benötigten elektrischen Leistung.

7. Prozessmessgerät (303) nach einem der vorhergehenden Ansprüche,
wobei die Speicherbetriebsvorrichtung (304) ausgeführt ist, aus den ersten von der steckbaren Speichereinheit (302) an das Prozessmessgerät übertragenen Daten zu erkennen, ob ein Softwareupdate eingespielt werden soll, und in diesem Fall die von der externen Energiequelle (102) auf das Prozessmessgerät übertragene elektrischen Leistung zu erhöhen.

8. Prozessmessgerät (303) nach einem der vorhergehenden Ansprüche,
wobei das Prozessmessgerät ein Füllstandmessgerät, ein Druckmessgerät oder ein Durchflussmessgerät ist.

9. Prozessmessgerät (303) nach einem der vorhergehenden Ansprüche,
wobei die Schnittstelle (301) eine Mehrzweckschnittstelle ist, an welche ein Peripheriegerät anschließbar ist.

10. Prozessmessgerät (303) nach einem der vorhergehenden Ansprüche,
wobei die Schnittstelle (301) zur Aufnahme der steckbaren Speichereinheit (302) in dem Prozessmessgerät (303) ausgeführt ist.

11. Verfahren zum Beschreiben und Auslesen einer steckbaren Speichereinheit (302) durch ein Prozessmessgerät (303), das Verfahren aufweisend die Schritte:
Anschluss einer steckbaren Speichereinheit (302) an eine Schnittstelle (301) das Prozessmessgeräts;
Überführen des Prozessmessgeräts in einen Speicherzugriffsmodus, welcher **dadurch gekennzeichnet ist, dass** das Prozessmessgerät die steckbare Speichereinheit mit der für einen Lesezugriff oder Schreibzugriff auf die steckbare Speichereinheit benötigten elektrischen Energie versorgen kann;
weiterhin aufweisend den Schritt: Bereitstellen der für den Lesezugriff oder den Schreibzugriff auf die steckbare Speichereinheit benötigten elektrischen Energie durch Erhöhen der im Prozessmessgerät frei verfügbaren elektrischen Energie.

12. Programmelement, das, wenn es von einer Speicherbetriebsvorrichtung eines Prozessmessgeräts (303) ausgeführt wird, das Prozessmessgerät anleitet, die Schritte gemäß Anspruch 11 auszuführen.

13. Computerlesbares Medium, auf dem ein Programmelement nach Anspruch 12 gespeichert ist.

## Claims

1. A process measurement device (303), comprising:
an interface (301) for connecting a plug-in memory unit (302) to the process measurement device; a memory operating device (304) for transferring the process measuring device into a memory access mode, **characterized in that**
the process measuring device is capable of supplying the plug-in memory unit with the electrical energy required for a read access or write access to the plug-in memory unit (302);
wherein the process measurement device comprises a power supply unit (305) for providing the electrical energy required for read access or write access to the plug-in memory unit (302) by increasing the electrical energy freely available in the process measurement device.

2. The process measurement device (303) of claim 1,
wherein the power supply unit (305) is configured to perform the following for providing the electrical power needed for read access or write access to the process measurement device: increasing power consumption of the process measurement device.

3. The process measurement device (303) of claim 1 or 2,
wherein the power supply unit (305) is configured to perform the following for providing the electrical power needed for read access or write access to the process measurement device: decreasing the electrical power required by the process measurement device.

4. The process measurement device (303) of any of the preceding claims,
wherein the power supply unit (305) is configured to perform the following for providing the electrical power needed for read access or write access to the process measurement device: reducing the electrical power required by a peripheral device attached to and powered by the process measurement device.

5. The process measuring device (303) according to one of the preceding claims,
wherein the process measuring device is designed for obtaining its electrical energy exclusively from a 4-20 mA two-wire loop (102).

6. The process measuring device (303) according to one of the preceding claims,
designed for continuously monitoring the electrical power required by the process measuring device and the peripherals optionally connected thereto, as well as the electrical power required by the plug-in memory unit.

7. The process measurement device (303) according to one of the preceding claims,
wherein the memory operation device (304) is configured to recognize from the first data transmitted from the plug-in memory unit (302) to the process measurement device whether a software update is to be imported, and in this case increasing the electrical power transmitted from the external energy source (102) to the process measuring device.

8. The process measuring device (303) according to any one of the preceding claims, wherein the process measuring device is a level gauge, a pressure gauge or a flow meter.

9. The process measuring device (303) according to one of the preceding claims, wherein the interface (301) is a multi-purpose interface, to which a peripheral device is connectable.

10. The process measuring device (303) according to any one of the preceding claims,
wherein the interface (301) is configured for receiving the plug-in memory unit (302) in the process measuring device (303).

11. A method for writing and reading a plug-in memory unit (302) by a process measurement device (303), the method comprising the steps of:
connecting a plug-in memory unit (302) to an interface (301) of the process measurement device; transferring the process measuring device into a memory access mode, **characterized in that** the process measuring device is capable of supplying the plug-in memory unit with the electrical energy required for read access or write access to the plug-in memory unit;
further comprising the step: providing the electrical energy required for the read access or the write access to the plug-in memory unit by increasing the electrical energy freely available in the process measurement device.

12. A program element that, when executed by a memory operating device of a process measurement device (303), directs the process measurement device to perform the steps of claim 11.

13. A computer-readable medium on which a program element according to claim 12 is stored.

## Revendications

1. Appareil de mesure de processus (303) comportant :
une interface (301) pour connecter une unité de mémoire enfichable (302) à l'appareil de mesure de processus,
un dispositif d' exploitation de mémoire (304) pour basculer l'appareil de mesure de processus dans un mode d'accès à la mémoire, **caractérisé en ce que**
l'appareil de mesure de processus peut alimenter l'unité de mémoire enfichable avec l'énergie électrique nécessaire pour un accès en lecture ou un accès en écriture à l'unité de mémoire enfichable (302),
dans lequel l'appareil de mesure de processus comporte une unité d'alimentation en énergie (305) pour fournir l'énergie électrique nécessaire pour l'accès en lecture ou l'accès en écriture à l'unité de mémoire enfichable (302) en augmentant l'énergie électrique librement disponible dans l'appareil de mesure de processus.

2. Appareil de mesure de processus (303) selon la revendication 1,
dans lequel l'unité d'alimentation en énergie (305) est configurée pour fournir l'énergie électrique nécessaire pour l'accès en lecture ou l'accès en écriture à l'appareil de mesure de processus afin d'exécuter l'étape suivante consistant à :
augmenter la consommation de courant de l'appareil de mesure de processus.

3. Appareil de mesure de processus (303) selon la revendication 1 ou 2,
dans lequel l'unité d'alimentation en énergie (305) est configurée pour fournir l'énergie électrique nécessaire pour l'accès en lecture ou l'accès en écriture à l'appareil de mesure de processus afin d'exécuter l'étape suivante consistant à :
réduire la puissance électrique requise par l'appareil de mesure de processus.

4. Appareil de mesure de processus (303) selon l'une des revendications précédentes,
dans lequel l'unité d'alimentation en énergie (305) est configurée pour fournir l'énergie électrique nécessaire pour l'accès en lecture ou l'accès en écriture à l'appareil de mesure de processus afin d'exécuter l'étape suivante consistant à :
réduire la puissance électrique requise par un appareil périphérique connecté à l'appareil de mesure de processus et alimenté par celui-ci.

5. Appareil de mesure de processus (303) selon l'une des revendications précédentes,
dans lequel l'appareil de mesure de processus est configuré pour prélever son énergie électrique exclusivement à partir d'un circuit à deux fils (102) de 4 à 20 mA.

6. Appareil de mesure de processus (303) selon l'une des revendications précédentes,
configuré pour surveiller en continu la puissance électrique requise par l'appareil de mesure de processus et les appareils périphériques éventuellement connectés à celui-ci, ainsi que la puissance électrique requise par le support de mémoire enfichable.

7. Appareil de mesure de processus (303) selon l'une des revendications précédentes,
dans lequel le dispositif d' exploitation de mémoire (304) est configuré pour déterminer à partir des premières données transmises à l'appareil de mesure de processus par l'unité de mémoire enfichable (302), si une mise à jour logicielle doit être effectuée et pour, dans ce cas, augmenter la puissance électrique transmise par la source d'énergie externe (102) à l'appareil de mesure de processus.

8. Appareil de mesure de processus (303) selon l'une des revendications précédentes,
dans lequel l'appareil de mesure de processus est un appareil de mesure de niveau de remplissage, un appareil de mesure de pression ou un appareil de mesure de débit.

9. Appareil de mesure de processus (303) selon l'une des revendications précédentes,
dans lequel l'interface (301) est une interface universelle à laquelle un appareil périphérique peut être connecté.

10. Appareil de mesure de processus (303) selon l'une des revendications précédentes,
dans lequel l'interface (301) est configurée pour recevoir l'unité de mémoire enfichable (302) dans l'appareil de mesure de processus (303).

11. Procédé d'écriture et de lecture d'une unité de mémoire enfichable (302) par l'intermédiaire d'un appareil de mesure de processus (303), le procédé comportant les étapes consistant à :
connecter une unité de mémoire enfichable (302) à une interface (301) de l'appareil de mesure de processus,
basculer l'appareil de mesure de processus dans un mode d'accès à la mémoire, **caractérisé en ce que** l'appareil de mesure de processus peut fournir à l'unité de mémoire enfichable l'énergie électrique nécessaire pour un accès en lecture ou un accès en écriture à l'unité de mémoire enfichable,
comportant en outre l'étape consistant à : fournir l'énergie électrique nécessaire pour l'accès en lecture ou l'accès en écriture à l'unité de mémoire enfichable, en augmentant l'énergie électrique librement disponible dans l'appareil de mesure de processus.

12. Elément de programme qui, lorsqu'il est exécuté par un dispositif d' exploitation de mémoire d'un appareil de mesure de processus (303), amène l'appareil de mesure de processus à exécuter les étapes selon la revendication 11.

13. Support lisible par ordinateur sur lequel est mémorisé un élément de programme selon la revendication 12.
